# EUROPEAN PATENT SPECIFICATION

(11) **EP 3 608 289 B1**
(45) Date of publication and mention of the grant of the patent: **15.12.2021**
(21) Application number: 18382601.5
(22) Date of filing: 09.08.2018
(51) Int. Cl.: C01B 32/25, C09D 183/04, C09D 7/61, C09D 7/40

(54) **METHOD FOR COATING A SURFACE MADE OF CERAMIC, GLASS OR PLASTIC WITH A DIAMOND COATING**
VERFAHREN ZUM BESCHICHTEN EINER OBERFLÄCHE AUS KERAMIK, GLAS ODER KUNSTSTOFF MIT EINER DIAMANT-BESCHICHTUNG
PROCÉDÉ DE REVÊTEMENT D'UNE SURFACE DE CÉRAMIQUE, DE VERRE OU DE PLASTIQUE AVEC UN REVÊTEMENT DE DIAMANT

(43) Date of publication of application: 12.02.2020
(73) Proprietor: Brolly Estepona, SL, 29680 Estepona (ES)
(72) Inventor: Hasselbacher, Alfred, 29680 Estepona (ES)
(74) Representative: Sahuquillo Huerta, Jesús

(56) References cited:
- WO-A1-2018/067634
- CN-A- 106 928 851
- US-A1- 2016 319 176

## Description

### FIELD OF THE INVENTION

The invention is related to a method for the surface coating of a ceramic, glass or plastic surface such as the surfaces included in smartphones, tablets, computer screens or car coats with a diamond coating (i.e. with a hardness H10) to protect the surface from breaks and scratches. In addition, this coating has the property of avoiding the adhesion of bacteria by the so-called soldering effect and to guarantee easy cleaning.

### STATE OF THE ART

The present invention has been developed since it has hitherto not been possible to apply a diamond or silicon coating on glass or plastic surfaces (Plexiglas), which creates an adhesion for an effective time frame. The state-of-the-art shows that more and more surfaces are coated with silicon up to liquid diamonds to achieve a better protection against scratches and breakage resistance by higher degrees of hardness. Until developed techniques reach the binding of the materials only with application of heat (thermo-technics). This requires the use of technology and can't be applied by the consumer or is not useful for economic reasons. In the case of cellular phones or tablets, it is not possible to use them after production, or in the after-sales area. The heat effect would cause damage to the device.

Industrial diamonds have been widely and successfully used in several downhole applications. They have been used, e.g., to provide super-abrasive drilling surfaces to afford improved performance of various downhole tools and components, including earth-boring tools for forming boreholes in subterranean earth formations for hydrocarbon production, carbon dioxide sequestration, among others. Diamonds have generally been used to provide cutting elements by securing them to a body. For example, fixed-cutter earth-boring rotary drill bits (also referred to as "drag bits") include diamond cutting elements that are fixed to a bit body of the drill bit. Similarly, roller cone earth-boring rotary drill bits may include various diamond components in cones that are mounted on bearing pins extending from legs of a bit body such that each cone is capable of rotating about the bearing pin on which it is mounted. A plurality of diamond cutting elements may be mounted to each cone of the drill bit.

Polycrystalline diamond compacts (PDCs) formed of small (e.g. micron-sized) diamond grains fused and bonded together by a high temperature, high pressure process using a metal catalyst, and supported on a ceramic substrate, have been used as a downhole cutting element. PDC drill bits have been found to provide a super - abrasive surface which can cut through hard rock for extended periods of time, and under severe downhole conditions of temperature, pressure, and corrosive downhole environments, while maintaining the integrity and performance of the drill bit.

In the document WO2011/130516 it is described a method for providing diamond compositions that promote improved nucleation and growth of the micron-sized diamond grains used to form the PDC's and that may also be used to reduce the internal stresses associated with the metal catalyst retained in the polycrystalline diamond microstructure, as well as methods of making these diamond compositions. In view of the many desirable properties of diamond, it is also desirable to provide diamond compositions that may be used for other applications, including various fluids, abrasives, coatings and other powder compact applications.

The present invention has been developed since it has hitherto not been possible to apply a diamond coating with so-called liquid diamonds to glass or plastic surfaces (plexiglass), ceramics or even car coats, which produces a solid surface (H10) for an effective time frame. This improves the fracture resistance and prevents scratches on the coated surface. The state-of-the-art shows that more and more surfaces are coated with silicon up to liquid diamonds to achieve a better protection against scratches and breaking strength by higher degrees of hardness. The techniques developed so far for surface treatment have been restricted to pure silicon coatings and are only used in industrial applications with heat application (thermo-technics). The use of diamond coatings for smartphones, tablets, TV or computer screen as well as car coatings has not been possible since a diamond coating does not adhere to the aforementioned materials. The fact that it is now possible for the consumer to apply a diamond coating on the smart-phone, TV or computer screen, or to coat his own car completely with a diamond coating is unique.

The document CN106928851A provides a high-strength water-based diatom mud coating, which relates to the indoor air purifying coatings. The high-strength water-based diatom mud coating provided by the invention is prepared by uniformly mixing a component A and a component B, wherein the component A is formed by mixing deodorizing emulsion, cellulase, negative ion powder, amylase, wood fibres, titanium dioxide, kaolin, sea-foam stone powder, diatomite, bentonite, mildew preventive, photocatalyst and water, and the component B is formed by mixing nano diamond powder, a dispersing agent and water. After the high-strength water-based diatom mud coating provided by the invention is sprayed and dried, the hardness is high, the absorbability is good, the friction and abrasion performance of the surface coating is greatly improved, and the surface is smooth and flat.

The document US2016319176A1 discloses a thermally conducting composition of the present invention includes (A) a cellulose nanofiber, and (B) at least one type of an inorganic powder selected from a metal oxide and a diamond having an average particle diameter of 50 nm or less. A method for producing the thermally conducting composition includes the steps of preparing a dispersion by adding water or a mixed solvent of water and a hydrophilic solvent to (A) a cellulose nanofiber and (B) at least one type of an inorganic powder selected from a metal oxide and a diamond having an average particle diameter of 50 nm or less; and removing the water or the mixed solvent of water and a hydrophilic solvent from the dispersion. The present invention provides a thermally conducting composition that utilizes a cellulose nanofiber and an inorganic powder having the thermal conductivity at a nano-scale size, can improve the thermal conductivity significantly, and further can have properties such as anisotropy and transparency, and a method for producing the same.

The document WO2018/067634A1 discloses coating compositions including diamond and either cationic curable resin systems or thiol-ene curable systems.

### SUMMARY OF THE INVENTION

It is an object of the invention to provide a method for coating a surface made of glass, plastic or ceramics that can be used by any consumer. It is also an object of the invention that the coating does not affect the operation of the device including the surface. These objectives are solved by the invention of claim 1. Further embodiments of the invention are disclosed in the dependant claims.

More concretely, the present invention makes it possible to coat glass, plastic glass (Plexiglass), ceramic and car coatings with a diamond coating. These may be pure diamond coatings (liquid diamonds), or instead of incorporating diamond particles in deionized water, silicone or silanes may also be used as the carrier material for the diamonds. The solids content of silicon or silanes is calculated from a minimum of 30% to 95% (calculation method: evaporation at 120°C).

Throughout the description and claims, the word "comprises" and its variations do not involve the exclusion of other technical specifications, additions, components or steps. For those skilled in the art, other objects, advantages and characteristics of the invention, will be clear partly from the description and partly from the invention in use. The following examples and drawings are provided for illustrative purposes only and are not intended to restrict this invention in any way. Moreover, this invention covers all possible embodiment combinations and preferred embodiments indicated here.

### BRIEF DESCRIPTION OF THE DRAWINGS

A very brief description of a series of drawings follows, which will help to better understand the invention, and which expressly relate to an embodiment of this invention that is presented as non-limiting example of this.
In the FIG.1 it is represented a photo of the coating of the invention
In the FIG.2 it is shown a microscope photo with the fullerene and crystallization of the nanodiamonds into the basic substance.

### DETAILED EMBODIMENT OF THE INVENTION AND EXAMPLES

The coating of the surfaces is applied after a pre-treatment with a preparer and cleaning composition including alcohol (ethanol or isopropanol solution) with the help of pads or a cloth. The drying time is about 10 minutes, depending on humidity and temperature. The curing time is 48 hours. After the drying time of 10 minutes, the smartphone or the coated object can be used. After the drying time of approx. 10 minutes the coating must be polished with a microfiber cloth. The polishing process is an important part for the chemical-mechanical-polishing process and for the quality of the coating.

The pre-treatment depends on the surface to be treated. Therefore, for plastic surfaces and car colours a mixture of isopropanol (C₃H₈O) together with iso-citric acid (C₆H₈O₇) from 5% up to 15% w/w mixture is used.

However, for glass and ceramics it is used isopropanol (C₃H₈O) together with a preparer composition with a mixture from 3% up to 45% w/w depending on the materials to be coated. In a preferred embodiment, the preparer is made from:
1000 gr deionised water
250 gr. Cristal of potassium hydrogen fluoride (HF₂K)
250 gr salt acid (HCl)
140gr potassium sulphate (K₂SO₄)

The application of this preparer by phones, tablets, computer screens, glass, Plexiglass and ceramic allows and effective coating regarding the quality and lifetime of diamond coating.

### Example

The diamond coating consists of microdiamond particles of 0.2 to 0.5 micron which are dissolved and stabilized in a deionized water, including a 2% w/w of glycol. In some cases, a pure diamond coating with microdiamond in deionized water can produce sufficient hardening protection. In most cases, the liquid microdiamonds are mixed and stabilized into a carrier substance made of silicon or silane. Electrostatic charging plays a role in microdiamonds, to avoid a drop later. The best hardness can be achieved by introducing microdiamonds into the following chemical substances, such as: cyclosilazanes, di-Me, Me-hydrogen, polymers with di-Me, Me, hydrogens, silazanes, reaction products with 3- (triethoxys <lil) -1-propanamine. The substance is a specifically prepared "chemical semi-finished product", i.e. it is prepolymerized or partially crosslinked. The mixture is made by high-micro-ultra-centrifugation.

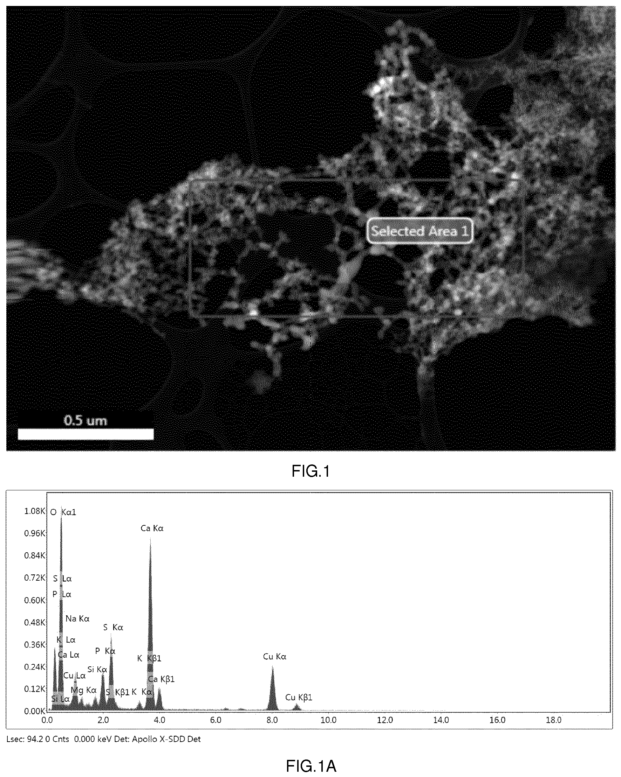

In the FIG.1 it is represented a photo of the coating of the invention. In the Fig.1 it is shown that the microdiamonds, what we have mixed together with glycol into silicon or silane did start the process of crystallization and the fullerene is going into the liquid substance. It means, with this fullerene in the liquid, it is a nanocomposite and absolute unique substance with hardness of 9,9 H.

The fullerene has a size of 5A = 0,5nm (5nm = 50 A = 1 A = 0,1nm) 1 Atom = 3-4A. This process of hardness from this nanocomposite need about 5 or 6 weeks to be so strong. In this time is going the glycol -or other stabilising element- away from the substance and the hardness of the crystallization of nanodiamonds arrived by the best result.

In the following table it is shown the values shown in the graph of the figure 1A:

| Element | Weight % | Atomic % | Net Int. | Net Error% | KABFactor |
|---|---|---|---|---|---|
| OK | 29.54 | 50.43 | 187.58 | 0.77 | 1.18 |
| NaK | 4.18 | 4.96 | 32.72 | 2.21 | 0.95 |
| MgK | 0.76 | 0.85 | 5.97 | 8.11 | 0.95 |
| SiK | 1.27 | 1.24 | 9.51 | 5.24 | 1 |
| P K | 5.58 | 4.92 | 41.81 | 1.83 | 1 |
| S K | 9.87 | 8.40 | 81.89 | 1.21 | 0.9 |
| K | 1.22 | 0.85 | 8.51 | 4.43 | 1.07 |
| CaK | 31.36 | 21.37 | 215.20 | 0.71 | 1.09 |
| CuK | 16.22 | 6.97 | 66.91 | 1.27 | 1.81 |

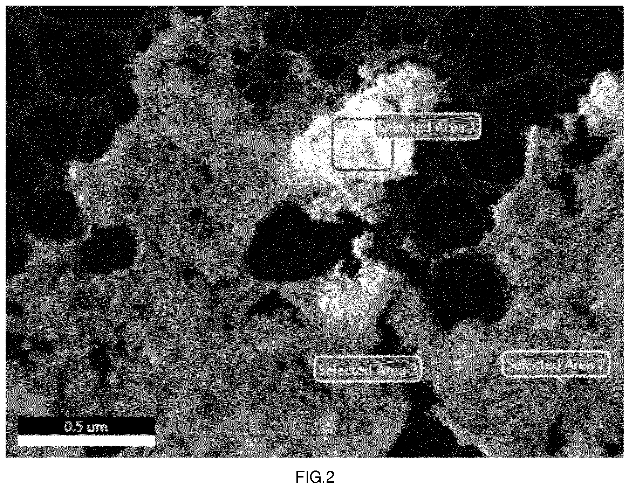

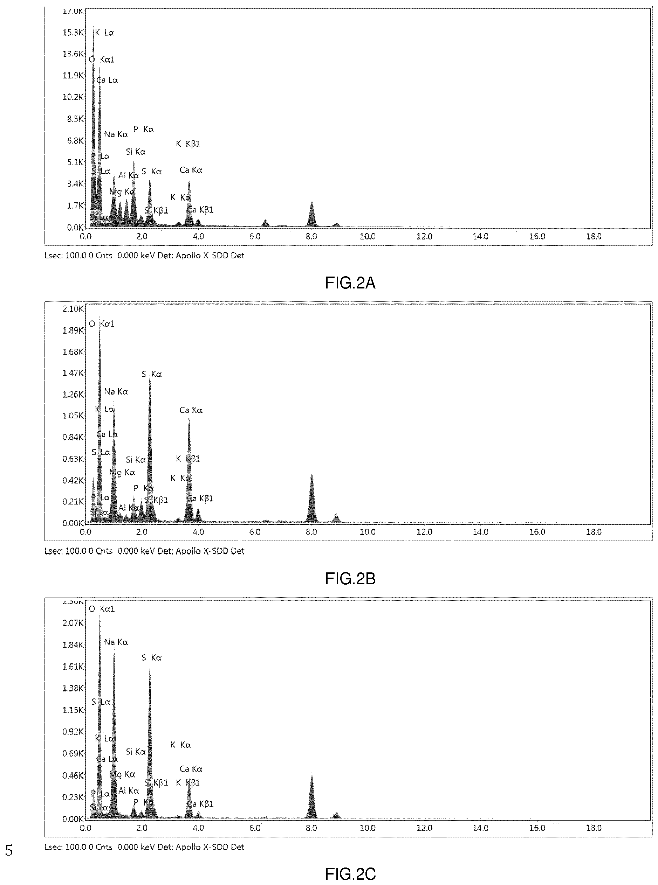

By the microscope photo shown in the FIG.2 show the fullerene and crystallization of the nanodiamonds into the basic substance. This is the evidences that we have with this new substance a nanocomposite with strong hardness. In the following table it is summarized the results of the analysis of three different areas into the same substance shown in the figures 2a, 2b and 2c.

**Area 1 (figure 2a):**

| Element | Weight % | Atomic % | Net Int. | Net Error% | KABFactor |
|---|---|---|---|---|---|
| OK | 39.43 | 54.73 | 1946.09 | 0.24 | 1.18 |
| NaK | 9.87 | 9.53 | 601.06 | 0.52 | 0.95 |
| MgK | 3.48 | 3.18 | 213.65 | 1.13 | 0.95 |
| AlK | 3.88 | 3.19 | 268.60 | 0.90 | 0.84 |
| SiK | 15.54 | 12.29 | 901.97 | 0.38 | 1 |
| PK | 1.24 | 0.89 | 71.95 | 2.49 | 1 |
| S K | 10.46 | 7.25 | 675.08 | 0.44 | 0.9 |
| K K | 1.06 | 0.60 | 57.29 | 2.05 | 1.07 |
| CaK | 15.05 | 8.34 | 802.59 | 0.37 | 1.09 |

**Area 2 (figure 2b):**

| Element | Weight % | Atomic % | Net Int. | Net Error% | KABFactor |
|---|---|---|---|---|---|
| O K | 32.25 | 47.73 | 323.43 | 0.57 | 1.18 |
| NaK | 16.57 | 17.06 | 205.06 | 0.75 | 0.95 |
| MgK | 0.48 | 0.47 | 5.97 | 9.41 | 0.95 |
| AlK | 0.36 | 0.31 | 5.01 | 9.61 | 0.84 |
| SiK | 3.36 | 2.84 | 39.66 | 1.98 | 1 |
| P K | 2.84 | 2.17 | 33.58 | 2.21 | 1 |
| S K | 22.61 | 16.70 | 296.42 | 0.60 | 0.9 |
| K K | 0.67 | 0.40 | 7.36 | 5.30 | 1.07 |
| CaK | 20.86 | 12.32 | 226.07 | 0.67 | 1.09 |

**Area 3 (figure 2c):**

| Element | Weight % | Atomic % | Net Int. | Net Error% | KABFactor |
|---|---|---|---|---|---|
| O K | 35.76 | 49.42 | 346.82 | 0.55 | 1.18 |
| NaK | 26.75 | 25.73 | 320.20 | 0.58 | 0.95 |
| MgK | 0.17 | 0.16 | 2.11 | 22.13 | 0.95 |
| AlK | 0.13 | 0.11 | 1.83 | 21.85 | 0.84 |
| SiK | 1.84 | 1.45 | 21.01 | 2.87 | 1 |
| | | | | | |
| PK | 0.78 | 0.56 | 8.93 | 5.45 | 1 |
| SK | 25.42 | 17.53 | 322.28 | 0.57 | 0.9 |
| KK | 0.48 | 0.27 | 5.11 | 6.40 | 1.07 |
| CaK | 8.67 | 4.78 | 90.84 | 1.09 | 1.09 |

## Claims

1. A method to protect from breaks and scratches a surface made of ceramic, glass or plastic comprising: (a) pre-treatment of the surface with a composition comprising an alcohol; (b) applying to the pre-treated surface a liquid composition comprising diamond particles of 0.2 to 0.5 micron incorporated in deionized water; (c) drying the surface in which has been applied the composition according to step (b); and (d) polish the previously dried surface according to step (c).

2. The method of claim 1 wherein the pre-treatment composition comprises isopropanol (C₃H₈O) together with iso-citric acid (C₆H₈O₇) from 5% up to 15% w/w for plastic and car colours coating pre-treatment.

3. The method of claim 1 wherein the pre-treatment composition comprises isopropanol (C₃H₈O) together with a preparer composition with a mixture from 3% up to 45% w/w and wherein the preparer is made from 1000 gr deionised water; 250 gr. Cristal of potassium hydrogen fluoride (HF₂K); 250 gr salt acid (HCl); and 140gr potassium sulphate (K₂SO₄) for phone, tablets, computer screens, glass, Plexiglas and ceramic pre-treatment.

4. The method of any of claims 1 to 3 wherein the composition comprising diamond particles of 0.2 to 0.5 micron dissolved in deionized water further comprises 2% w/w of glycol.

5. The method of any of claims 1 to 4 wherein the composition comprising diamond particles of 0.2 to 0.5 micron dissolved in deionized water further comprises silicone or silanes.

6. The method of claim 5 wherein the solids content of silicon or silanes is comprised between 30% to 95% w/w.

7. The method according to claims 5 and 6 wherein the silicone or silanes comprises at least one of the following: cyclosilazanes, di-Me, Me-hydrogen, polymers with di-Me, Me, hydrogens, silazanes, reaction products with 3-(triethoxys<lil)-1-propanamine.

## Patentansprüche

1. Eine Methode zum Schutz vor Brüchen und Kratzern einer Oberfläche aus Keramik, Glas oder Kunststoff, die Folgendes umfasst: (a) Vorbehandlung der Oberfläche mit einer Zusammensetzung, die einen Alkohol enthält; (b) Auftragen einer flüssigen Zusammensetzung, die Diamantpartikel von 0,2 bis 0,5 Mikron in entionisiertem Wasser enthält, auf die vorbehandelte Oberfläche; (c) Trocknen der Oberfläche, auf die die Zusammensetzung gemäß Schritt (b) aufgetragen wurde; und (d) Polieren der zuvor getrockneten Oberfläche gemäß Schritt (c).

2. Die Methode nach Anspruch 1, bei der die Vorbehandlungszusammensetzung Isopropanol (C₃H₈O) zusammen mit Iso-Zitronensäure (C₆H₈O₇) in einer Menge von 5 % bis 15 % w/w für die Vorbehandlung von Kunststoff- und Autolackbeschichtungen enthält.

3. Die Methode nach Anspruch 1, bei der die Vorbehandlungszusammensetzung Isopropanol (C3H8O) zusammen mit einer Präparatorzusammensetzung mit einem Gemisch von 3 % bis 45 % w/w umfasst und bei der der Präparator aus 1000 g entionisiertem Wasser, 250 g Kaliumhydrogenfluorid (HF2K), 250 g Salzsäure (HCl) und 140 g Kaliumsulfat (K2SO4) für die Vorbehandlung von Telefonen, Tabletten, Computerbildschirmen, Glas, Plexiglas und Keramik hergestellt wird.

4. Die Methode nach einem der Ansprüche 1 bis 3, bei der die Zusammensetzung, die in deionisiertem Wasser gelöste Diamantpartikel von 0,2 bis 0,5 Mikron enthält, außerdem 2 % w/w Glykol enthält.

5. Die Methode nach einem der Ansprüche 1 bis 4, bei der die Zusammensetzung, die in deionisiertem Wasser gelöste Diamantpartikel von 0,2 bis 0,5 Mikron enthält, zusätzlich Silikon oder Silane umfasst.

6. Die Methode nach Anspruch 5, bei der der Feststoffgehalt an Silizium oder Silane zwischen 30 % und 95 % w/w.

7. Die Methode nach Anspruch 5 und 6, bei der das Silicon oder die Silane mindestens eines der folgenden Elemente umfassen: Cyclosilazane, Di-Me, Me-Wasserstoff, Polymere mit Di-Me, Me, Wasserstoff, Silazane, Reaktionsprodukte mit 3-(Triethoxys<lil)-1-Propanamin.

## Revendications

1. Une méthode pour protéger contre les cassures et les rayures une surface en céramique, en verre ou en plastique comprenant : (a) le prétraitement de la surface avec une composition comprenant un alcool ; (b) l'application sur la surface prétraitée d'une composition liquide comprenant des particules de diamant de 0,2 à 0,5 micron incorporées dans de l'eau déminéralisée ; (c) le séchage de la surface sur laquelle a été appliquée la composition selon l'étape (b) ; et (d) le polissage de la surface préalablement séchée selon l'étape (c).

2. La méthode de la revendication 1, dans lequel la composition de prétraitement comprend de l'isopropanol (C₃H₈O) ainsi que de l'acide iso-citrique (C₆H₈O₇) de 5 % jusqu'à 15 % p/p pour le prétraitement des revêtements en plastique et des couleurs de voiture.

3. La méthode de la revendication 1, dans lequel la composition de prétraitement comprend de l'isopropanol (C₃H₈O) ainsi qu'une composition de préparation avec un mélange de 3% à 45% p/p et dans lequel la préparation est faite à partir de 1000 g d'eau déminéralisée ; 250 g de cristal de fluorure d'hydrogène de potassium (HF₂K) ; 250 g d'acide salin (HCl) ; et 140 g de sulfate de potassium (K₂SO₄) pour le prétraitement de téléphones, tablettes, écrans d'ordinateur, verre, plexiglas et céramique.

4. La méthode de l'une quelconque des revendications 1 à 3 dans laquelle la composition comprenant des particules de diamant de 0,2 à 0,5 microns dissouts dans de l'eau déminéralisée comprend en outre 2% p/p de glycol.

5. La méthode de l'une quelconque des revendications 1 à 4, dans lequel la composition comprenant des particules de diamant de 0,2 à 0,5 microns dissouts dans de l'eau déminéralisée comprend en outre du silicone ou des silanes.

6. La méthode de la revendication 5 dans laquelle la teneur en solides du silicone ou des silanes est comprise entre 30% et 95% p/p.

7. La méthode de l'une quelconque des revendications 5 et 6 dans lequel le silicone ou les silanes comprennent au moins un des éléments suivants : cyclosilazanes, di-Me, Mehydrogène, polymères avec di-Me, Me, hydrogènes, silazanes, produits de réaction avec la 3-(triéthoxys<lil)-1 -propanamine.
